# EUROPEAN PATENT SPECIFICATION

(11) **EP 0 544 106 B1**
(45) Date of publication and mention of the grant of the patent: **31.07.1996**
(21) Application number: 92118191.3
(22) Date of filing: 23.10.1992
(51) Int. Cl.: A01G 9/02

(54) **Pot for culturing plant**
Topf für die Pflanzenkultur
Pot pour la culture de plantes

(30) Priority: 29.10.1991 JP 96220/91 U
(43) Date of publication of application: 02.06.1993
(73) Proprietor: Japan Tobacco Inc., Shinagawa-ku, Tokyo 140 (JP)
(72) Inventor: Kita, Sueharu, c/o JT Agris Corporation, Minato-ku, Tokyo 105 (JP); Takeda, Yasuo, c/o Applied Plant Research Lab., Oyama-shi, Tochigi 323 (JP)
(74) Representative: Reinhard - Skuhra - Weise & Partner

(56) References cited:
- GB-A- 1 329 266
- US-A- 1 391 353

## Description

The invention relates to a pot for culturing plants, comprising a lid having a stem opening at the center, and a pot having an annular side wall portion and a bottom portion, wherein the lid is adapted to be placed on the upper edge of the pot.

Such a pot is in particular suitable for culturing bulbous plants in which a plurality of sprouts is put forth, such as calla, caladium, lily and canna.

### Background of the Invention

In the prior art, to culture bulbous plants in which a plurality of sprouts put forth, one uses a conventional pot used for culturing any kind of plants. Such a conventional pot comprises a round bottom, a side wall portion provided to surround the bottom, forming an opening on the top.

One type of a prior art plant culturing pot is disclosed in the Japanese patent publication No. 52-42690 entitled "a bottom water supply system", and another is disclosed in the Japanese utility model laid-open publication No. 61-50565 entitled "a water supply plant culture device". In particular, the bottom water supply system is known as "ST pot" and commercially available.

When one uses a conventional pot or ST pot disclosed in the Japanese patent publication No. 52-42690 for culturing a bulbous plant from which plural sprouts put forth in different directions, these sprouts cannot put forth and grow uprightly. Thus, sprouts of bulbous plants cultured in such a conventional pot often have difficulty to receive sufficient daylight, and result in grown plants of a poor appearance. Further, bulbous plants cultured in a conventional pot tend to grow to a plant of ill-proportioned body, which is ready to fall down.

The pot disclosed in Japanese utility model laid-open publication No. 61-50565 comprises a rain and light prevention layer provided on a stem opening. The layer, however, does not function to guide sprouts of a plant to grow uprightly, nor can guide sprouts of a plant to grow toward a stem opening of the pot.

GB-A-1,329,266 discloses a container for bulbous plants, comprising a plastics pot, a transparent plastics cover, and a separate plastics coupling member having an opening therethrough, coupling or for coupling the pot and the cover so that the pot and the coupling member can be removed from each other by deformation of the pot and/or of the coupling member. The coupling member includes a central wall with a central opening therethrough allowing growth of the plant.

### Disclosure of the Invention

The object of this invention is to provide a pot for culturing a plant, particularly a bulbous plant from which plural sprouts put forth in different directions, in which sprouts of the plant grow uprightly, resulting in a plant of a good appearance. The plant cultured in the pot of this invention grows to have a well proportioned body that is difficult to fall down.

Means for attaining the above object will be discussed below.

First, this invention provides a pot for culturing plants, comprising a lid having a stem opening at the center, and a pot having an annular side wall portion and a bottom portion, wherein the lid is adapted to be placed on the upper edge of the pot, characterized in that a guide tube is provided and adapted to be inserted into said stem opening so that a lower portion of said guide tube extends into the pot.

Second, this invention provides a pot for culturing plants wherein the guide tube has a cylindrical portion and a cone portion extending therefrom.

Third, this invention provides a pot for culturing plants wherein a water receiving plate having a bottom portion and a rim wall portion is adapted to be used in combination with said pot.

The guide tube that is inserted in the stem opening on the lid may be embodied in other forms than a form consisting of a cylindrical portion and a cone portion extending from the cylindrical portion. For example, the entire body of the guide tube may be formed in a cone shape body. In such an embodiment, the lower part of the cone shape body is placed in the pot when the lid is placed on the pot.

When the pot of this invention is used, a bulb, or seed etc. is buried in culture soil filled in the pot of this invention. The guide tube is then placed on the culture soil, and the lid is placed on the pot so that the lid can hold the guide tube in place. Further, the water receiving plate is engaged with the bottom portion of the pot.

By storing water in the water receiving plate, the water goes up into the pot through the openings on the bottom of the pot. Additionally, water can be supplied through the stem opening on the lid.

Sprouts put forth from the bulb grow along the inner surface of the cone portion of the guide tube to reach the cylindrical portion. Thus, the cone portion guides sprouts put forth to center to the cylindrical portion.

The sprouts further grow along the inner surface of the cylindrical portion. As a result, respective stems of the plant grow uprightly because they are partially supported by the wall of the cylindrical portion of the guide tube.

Since the pot of this invention comprises a guide tube that guides stems of the plant to grow uprightly, it is suitable for culturing plants in which a plurality of sprouts put forth and grow in different directions such as calla. By using the pot of this invention, a proportionally grown plant of an excellent appearance that is difficult to fall down can be obtained.

### Brief Description of the Drawings

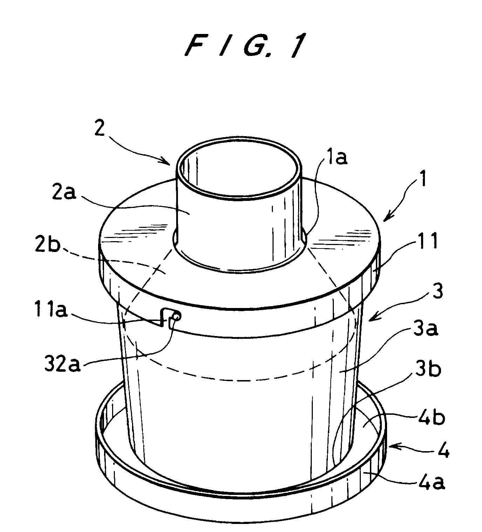

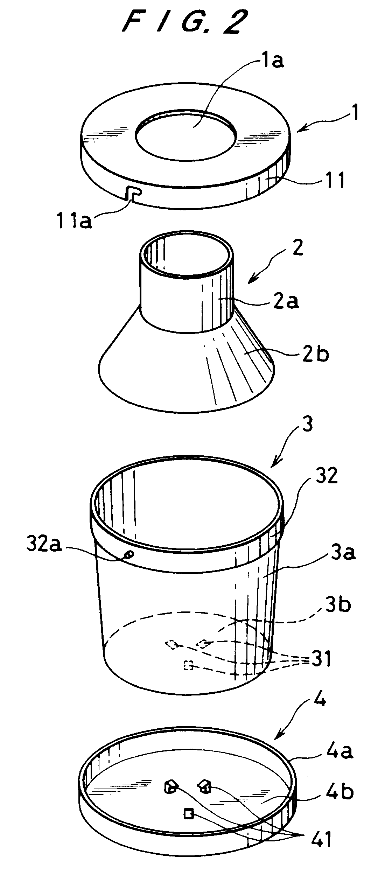

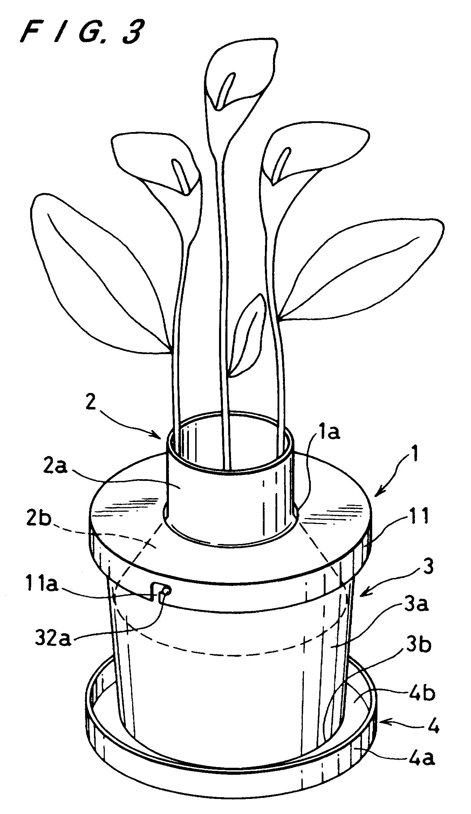

Fig. 1 shows a perspective view of a preferred embodiment of a pot for culturing plants of this invention. Fig. 2 shows perspective views of respective elements of a preferred embodiment of a pot for culturing plants of this invention. Fig. 3 shows a perspective view describing how a preferred embodiment of a pot for culturing a plant of this invention is used.

### Preferred Embodiments

A preferred embodiment of a pot for culturing a plant according to this invention will be discussed in detail by making reference to the drawings.

As shown in Fig. 1, a pot for culturing plants of a preferred embodiment comprises a lid (1) in which a stem opening (1a) is provided at the center, a guide tube (2) having a cylindrical portion (2a) to be joined with the lid (1), and a cone portion (2b) extending beneath the cylindrical portion (2a), a pot (3) having a side wall portion (3a) and a bottom portion (3b) provided with openings (31), and a water receiving plate (4) having a rim wall portion (4a) and a bottom portion (4b). The water receiving plate (4) is used in combination with the pot (3), and the guide tube (2) is so formed that the lid (1) is placed on the upper edge of the pot in which the cylindrical portion (2a) extends through the stem opening (1a) on the lid (1) when the cone portion (2b) is placed in the pot.

The diameter of the stem opening (1a) on the lid (1) is slightly bigger than that of the cylindrical portion (2a) of the guide tube (2). As shown in Fig. 2, an engaging wall (11) is provided to surround the edge of the lid (1). On the engaging wall (11), an L-shape groove (11a) is provided.

Another engaging wall (32) extends from the upper edge of the side wall portion (3a) of the pot (3). The engaging wall (32) is provided with a stick projection (32a) that is engageable with the L-shape groove (11a) of the lid (1).

On the upper surface of the bottom portion (4b) of the water receiving plate (4), engaging hooks (41) are provided to engage in the openings (31) on the bottom portion (3b) of the pot (3).

The engaging hooks (41) and the openings (31) are so formed that water can be supplied into the pot (3) through the openings (31) even when the engaging hooks and the openings are engaged. According to another preferred embodiment, additional openings for suppying water (not shown in the drawings) may be provided on the bottom portion (3b) of the pot (3).

The method of using the pot for culturing plants discussed above will be then explained below.

First, the pot (3) is filled with culture soil and a bulb of calla is buried in the soil, as shown in Fig. 3. The guide tube (2) is then placed on the soil, and the lid (1) is placed to engage the L-shape groove (11a) with the stick projection (32a) so that the lid (1) covers the upper edge of the pot (3).

Please note that the diameter of the cylindrical portion (2a) of the guide tube (2) is carefully selected to give proper space for stems and leaves depending on the type of a plant to be cultured.

When the lid (1) is engaged with the pot (3), the lid (1) holds the guide tube (2) in place. The engaging hooks (41) are engaged in the openings (31) to hold the pot (3) on the water receiving plate (4) in place.

When water is stored in the water receiving plate (4), the water is supplied to the soil in the pot (3) via the openings (31) on the bottom portion (3b) of the pot (3). However, water may be supplied through the stem opening (1a) on the lid (1).

When sprouts put forth from the bulb, the cone portion (2b) of the guide tube (2) guides the sprouts to grow along the inner surface of the cone portion (2b) so that all sprouts are centered to extend through the cylindrical portion (2a) of the guide tube (2).

When sprouts grow to reach the cylindrical portion (2a), they grow uprightly along the inner surface of the cylindrical portion (2a). As a result, a plant cultured in the pot of this invention grow uprightly because the guide tube (2) directs sprouts growing toward the cylindrical portion (2a) which partially supports the stems grown from the sprouts.

As explained above, when a bulb of calla is cultured in the pot of this invention, most of sprouts grow along the guide tube (2), and equally grown, resulting in a plant with a well proportioned stems, flowers and leaves. Entire body of plants receives daylight very well, and a plant with an excellent appearance could be obtained. No plants fall down when they are grown.

Please note that the pot of this invention may be properly used not only for culturing bulbous plants in which plural sprouts put forth such as calla, but also for any kinds of plants other than bulbous plants.

## Claims

1. A pot for culturing plants, comprising a lid (1) having a stem opening (1a) at the center, and a pot (3) having an annular side wall portion (3a) and a bottom portion (3b), wherein the lid (1) is adapted to be placed on the upper edge of the pot (3),
**characterized in that**
a guide tube (2) is provided and adapted to be inserted into said stem opening (1a) so that a lower portion of said guide tube (2) extends into the pot (3).

2. A pot according to claim 1,
**characterized in that**
the guide tube (2) has a cylindrical portion (2a) and a cone portion (2b) extending therefrom.

3. A pot according to claim 1 or claim 2,
**characterized in that**
a water receiving plate (4) having a bottom portion (4b) and a rim wall portion (4a) is adapted to be used in combination with said pot (3).

## Patentansprüche

1. Topf zur Kultivierung von Pflanzen, der einen Deckel (1) mit einer zentral angeordneten Öffnung für Pflanzenstengel, einen Topf (3) mit einem ringförmigen Seitenwandteil (3a) und einem Bodenteil (3b) umfaßt, wobei der Deckel (1) so gestaltet ist, daß er auf den oberen Rand des Topfes (3) plazierbar ist, dadurch gekennzeichnet, daß ein Führungsrohr (2) vorgesehen und so gestaltet ist, daß es in die Öffnung (1a) für Pflanzenstengel einsetzbar ist, so daß ein unteres Teilstück des Führungsrohres (2) in den Topf (3) hineinragt.

2. Topf zur Kultivierung von Pflanzen nach Anspruch 1, bei dem das Führungsrohr (2) einen zylindrischen Abschnitt (2a) und einen sich daran anschließenden konischen Abschnitt (2b) aufweist.

3. Topf zur Kultivierung von Pflanzen nach Anspruch 1 oder 2, bei dem ein wassserauffangender Untersetzer (4) mit einem Bodenteil (4b) und dem Rand eines Wandteiles (4a) so ausgestaltet ist, daß dieser Untersetzer (4) in Verbindung mit dem Topf (3) verwendbar ist.

## Revendications

1. Pot pour la culture de plantes, comportant un couvercle (1) ayant une ouverture de tige (1a) au centre, et un pot (3) ayant une partie de paroi latérale annulaire (3a) et une partie de fond (3b) dans lequel le couvercle (1) est adapté pour être placé sur le bord supérieur du pot,
caractérisé en ce que
un tube de guidage (2) est prévu et adapté pour être inséré dans ladite ouverture de tige (1a) de façon que la partie inférieure dudit tube de guidage (2) s'étende dans le pot.

2. Pot selon la revendication 1,
caractérisé en ce que
le tube de guidage (2) comporte une partie cylindrique (2a) et une partie de cône (2b) qui s'étend depuis celle-ci.

3. Pot selon la revendication 1 ou 2,
caractérisé en ce que
une plaque de réception d'eau (4) ayant une partie de fond (4b) et une partie de paroi de rebord (4a) est adaptée pour être utilisée en combinaison avec ledit pot (3).
